# EUROPEAN PATENT SPECIFICATION

(11) **EP 2 452 734 B1**
(45) Date of publication and mention of the grant of the patent: **05.04.2017**
(21) Application number: 11189287.3
(22) Date of filing: 16.11.2011
(51) Int. Cl.: B01D 21/24, B01D 21/00, F24D 19/00, F24D 3/10

(54) **Dirt separation device for thermal fluids**
Schmutztrennungsvorrichtung für Wärmeflüssigkeit
Dispositif de séparation de saletés pour fluides thermiques

(30) Priority: 16.11.2010 IT MI20102124
(43) Date of publication of application: 16.05.2012
(73) Proprietor: Far Rubinetterie S.P.A., 28024 Gozzano (NO) (IT)
(72) Inventor: Allesina, Guerrino, 28024 Gozzano (IT)
(74) Representative: Coloberti, Luigi

(56) References cited:
- GB-A- 457 784
- JP-A- 2010 125 417
- US-A- 4 357 151
- US-A- 4 400 280

## Description

### BACKGROUND OF THE INVENTION

The present invention relates to a filtering cartridge suitable to be used in dirt separation devices conformed for separating, by gravity and decantation, dirt particles entrained by a thermal fluid flowing along both household and industrial heating and/or cooling plants, as well as to a device suitable for separating dirt particles from a thermal fluid, comprising a filtering cartridge according to the invention.

### PRIOR ART

It is known that in heating and/or cooling plants, both of household and/or industrial type, a thermal fluid which is continuously circulated, entrains dirt particles, for example magnetic and non magnetic solid particles present in the fluid, or rust getting off the circulation pipes.

Accordingly, in this type of thermal plants, gravitational decantation devices are used for separation of the dirt particles entrained by the flowing fluid, in order to avoid to build up or deposition in certain critical areas or parts of a plant, thereby compromising the proper operation thereof.

Devices of this type generally require enlarged fluid passages to slow down the speed of the fluid, in order to cause decantation of the dirt particles, which thereby fall down by gravity and are collected at the bottom side of the separation device.

Generally, a dirt separation device comprises a hollow body having an inlet port and an outlet port for the thermal fluid, which open into a wide decantation chamber provided with a filtering cartridge suitable to divert and slow down the fluid flow, as well as to prevent the dirt particles from being entrained by the fluid, thereby allowing them to fall down; the decantation chamber for housing the filtering cartridge communicates with a quieting chamber at the bottom side for collecting the separated particles which can be periodically purged by removing a closure plug or by opening a drainage valve.

A wide range of filtering cartridges is presently sold, which are variously made and provided with cylindrically or spirally shaped metal and/or plastic nets having shaped and sized openings for the fluid to pass therethrough.

In conventional separation devices, the shape of the filtering cartridges is such as to cause the building up or retainment of greater sized particles in certain areas of the same filtering cartridge, thereby causing an increase in the pressure drop: all this is resulting in a greater power demand for fluid circulation, and finally in a clogging of the same filtering and separation device.

A gravitational separator device having membrane baffles therein, is known from US-A-4.194.976, which is suitable for the separation of solids from liquid and foam, in a completely different technical field, such as floatation cells for mining industry.

Particle separators are also known from WO-A-2004/105954 and WO-A-2009/122127, in which the separation of the solid particles is caused by a magnet and by a whirling action in the downwardly flowing fluid, which tends to entrain again the non magnetic particles towards the outlet port and recirculation in the heating and/or coaling system.

JP2010125417 shows an ultraviolet irradiation water treatment apparatus including a vertical cylindrical vessel in which a plurality of ultraviolet lamps parallel to the axis of the vessel are arranged; the water flows spirally near the ultraviolet lamps for the treatment.

### OBJECTS OF THE INVENTION

An object of the invention is to provide a device suitable for separation of dirt particles present in a thermal fluid flowing in a heating and/or cooling plant, having an improved filtering action, wherein use is made of a composable filtering cartridge.

The filtering cartridge is differently configured and of simplified construction in respect to conventional filtering cartridges, such as to cause repetitive diversions in different directions of the dirt particles and the fluid, tending to slow down the speed and downwardly guide and fall down, by gravity, the dirt particles in the thermal fluid within the decantation chamber of a dirt separation device.

### BRIEF DESCRIPTION OF THE INVENTION

The above-mentioned objects can be achieved by a dirt separation device according to claim 1.

### BRIEF DESCRIPTION OF THE DRAWINGS

These and further characteristics of the filtering cartridge and the dirt separation device according to the present invention, will be further described herein below with reference to some examples shown in the annexed drawings, in which:
Fig. 1 is a view of a dirt separation device according to a preferred embodiment of the present invention;
Fig. 2 is an enlarged, longitudinal sectional view of Fig. 1;
Fig. 3 is a perspective view of the filtering cartridge;
Fig. 4 is an enlarged detail of Fig. 3;
Fig. 5 is an enlarged cross-sectional view of a flow diverting bar of the filtering cartridge in Fig. 3, angularly oriented in a first direction;
Fig. 6 is an enlarged cross-sectional view of a flow diverting bar similar to that in Fig. 5, angularly oriented in a second direction;
Fig. 7 is a cross-sectional view of a bar-shaped flow diverting element similar to the preceding figures, showing a different configuration and/or arrangement and number of flow diverting fins;
Fig. 8 is an enlarged cross-sectional view of a further configuration of a bar-shaped flow diverting element;
Fig. 9 is an enlarged cross-sectional view of another configuration of a bar-shaped flow diverting element.

### DETAILED DESCRIPTION OF THE INVENTION

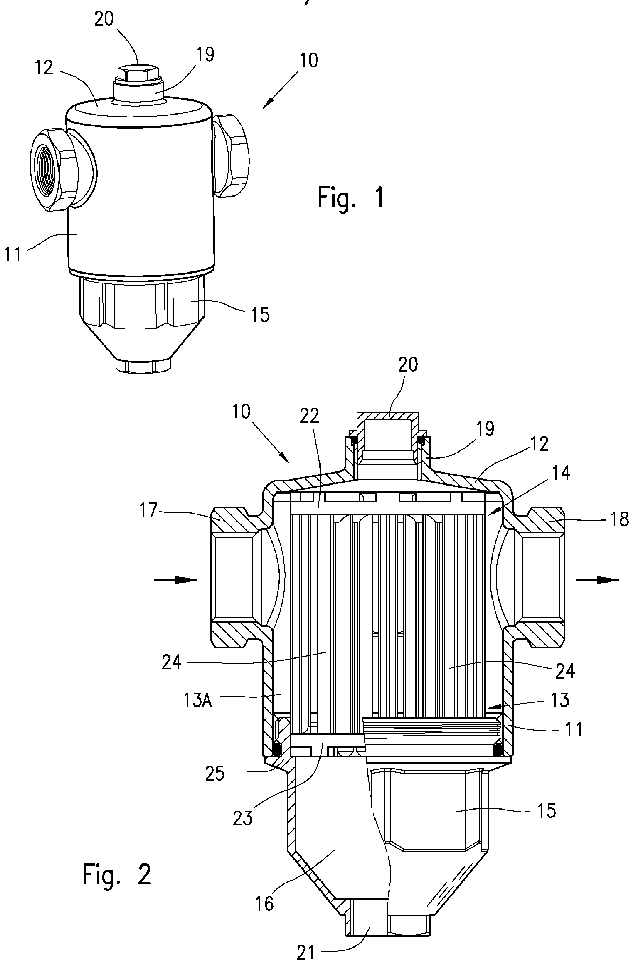

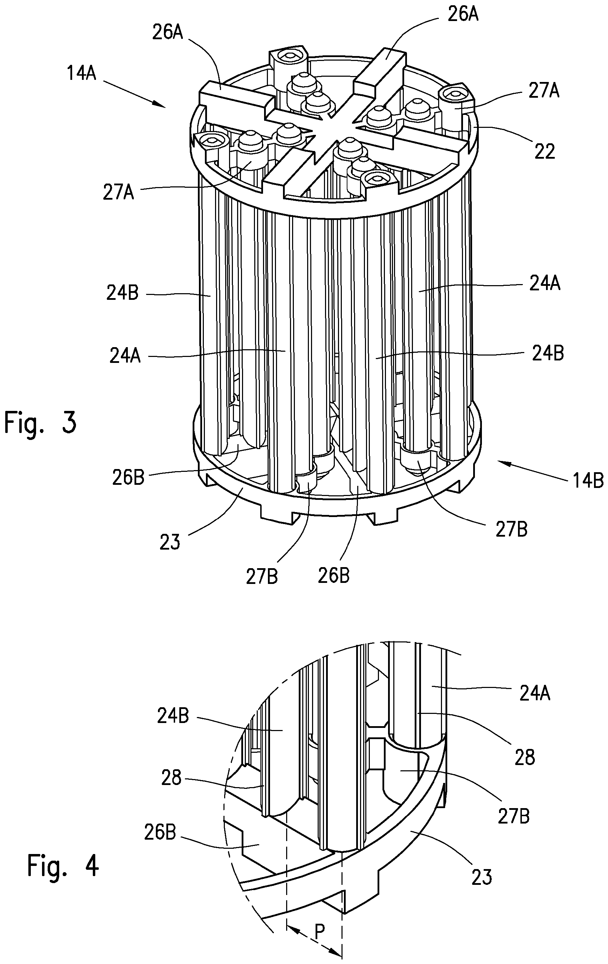

As shown in Fig. 1 and 2, the dirt separation device for separating dirt particles entrained by a fluid flowing in a heating and/or cooling plant, comprises a hollow cylindrical body 10 having a peripheral wall 11 and a top wall 12, the inner surfaces thereof defining a first dirt decantation chamber 13 for housing a filtering cartridge 14, a possible embodiment thereof being shown in Fig. 3.

Again in Fig. 1 and 2, with reference number 15 has been designated a bottom cup defining a second quieting chamber 16 in fluid communication with the decantation chamber 13 through the filtering cartridge 14, for the collection of the dirt particles that are separated, by gravity, from the fluid circulating through the decantation chamber 13 and the filtering cartridge 14; the bottom cup 15 can be removably and sealingly fastened to the hollow body 10 in any manner, for example, by screw means as shown.

The body 10 of the dirt separation device has an inlet port 17 and an outlet port 18 for a thermal fluid circulating within a heating plant, in which the dirt separation device according to the present invention has been installed.

In the example shown, the inlet port 17 and the outlet port 18 for the fluid are axially aligned and arranged in an orthogonal direction to the longitudinal axis of the decantation chamber 13; however one or both ports 17 and 18 may be differently orientated and/or positioned. In addition, as shown in Fig. 1 and 2, the ports 17 and 18 have been shown in the form of internally threaded joints; however, they may be configured in a different manner, for example with externally threaded joints, or provided with flanges.

Referring back to Figs. 1 and 2, with the reference number 19 has been designated a threaded hole in the upper part 12 of the hollow body 10, which can be closed by a removable plug 20, for example for the installation of an automatic venting valve for venting the air or gases that may be present in the thermal fluid; similarly, with reference number 21 has been designated a threaded hole on the bottom cup 15 wherein a closure tap or draining valve can be screwed for puging the dirt particles that has deposited in the quieting chamber 16.

Finally, in Fig. 2 it can be seen that the filtering cartridge 14 comprises a cylindrical body radially spaced apart from the inner surface of the peripheral wall 11, to provide an annular space 13A for the circulation of the fluid, longitudinally extending to the cartridge 14, from the inlet and outlet ports 17, 18, towards the bottom cup 15.

As shown in the perspective view in Fig. 3, the filtering cartridge 14 comprises two oppositely oriented first and second fluid diverting units 14A, 14B, each comprising a plurality of bar-shaped fluid diverting elements 24 laterally spaced apart from each other, which parallely extend to the longitudinal axis of the body 10, from a side of an upper base element in the form of an annular element 22 at the upper end of the cartridge, and from a side of a lower base element, again consisting of an annular element 23.

In the assembled condition of the dirt separation device, the upper annular element 22 of the filtering unit 14A rests against the inner shoulder surface of the upper wall 12, whereas the lower annular element 23 of the filtering unit 14B rests against an annular shoulder surface 25 of the cup 15, as shown.

In the example in Fig. 3, the cartridge 14 consists of two filtering units 14A, 14B that are identical to each other, the one being upside-down in respect to the other one, each filtering unit being obtained by injection moulding of plastic material. As shown, each filtering unit of the cartridge 14 comprises an annular base element 22, 23, configured with radial spokes 26A, 26B extending according to orthogonal diameters; a plurality of bar-shaped flow diverting elements 24A, 24B are extending in opposite directions from a side of each spoke 26A, 26B of the upper 22, and lower 23 annular elements, respectively.

Each annular element 22 and 23, in intermediate positions to the spokes 26A and 26B, has a plurality of cylindrical seats 27A, 27B radially aligned in two orthogonal directions, in which the free ends of the bar-shaped elements 24B, 24A, respectively, are press fitted or seated, as shown.

Accordingly, both the bar-shaped elements 24A of the upper annular element 22, and the bar-shaped elements 24B of the lower annular element 23 of the filtering cartridge 14, result to be arranged in diametrical plans separated by a constant angle, for example comprised between 30° and 60°, preferably 45°, as a function of the geometry of the cartridge, number of bar-shaped elements 24, shape and/or size thereof.

The bar elements 24 have an elongated shape having any suitable cross-sectional outline, such as to form a number of longitudinally extending fluid-diversion surfaces, for example by providing the bar-shaped elements 24 with longitudinal fins and/or slots, as will be detailed below.

As shown in Figs. 3-6, each bar-shaped element 24A and 24B has a cylindrical body provided with four longitudinal fins 28, angularly spaced by 90°, extending throughout the length of the same bar-shaped elements, or a part thereof; considering that the outline of the cross-section of the bar-shaped elements 24A, 24B can be any, provided that it is suitable for causing a diversion of the fluid, it has been observed that good results in the filtration and decantation of dirt particles have been achieved when the diameter D of the bar-shaped elements, and the pitch P between adjacent bar-shaped elements are maintained within a determined range of values, for example as indicated below:
D ranging between 3 and 10 mm
P ranging between 7 and 30 mm
not excluding higher or lower values than those indicated herein, as a function of the cross-sectional shape or profile.

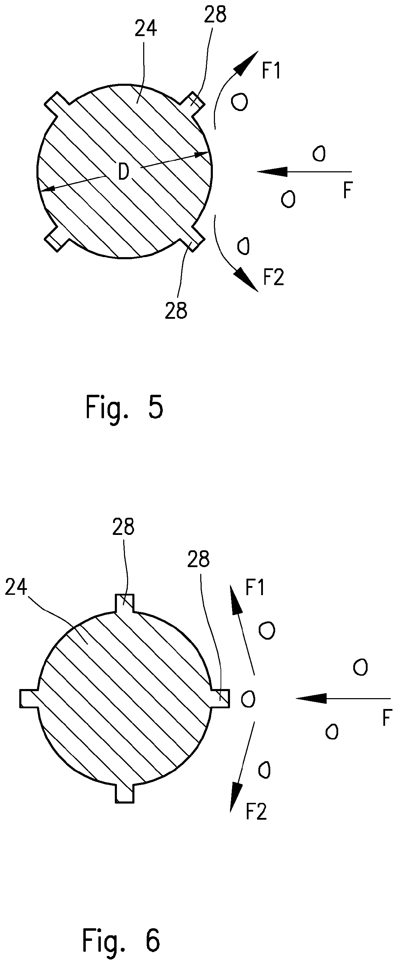

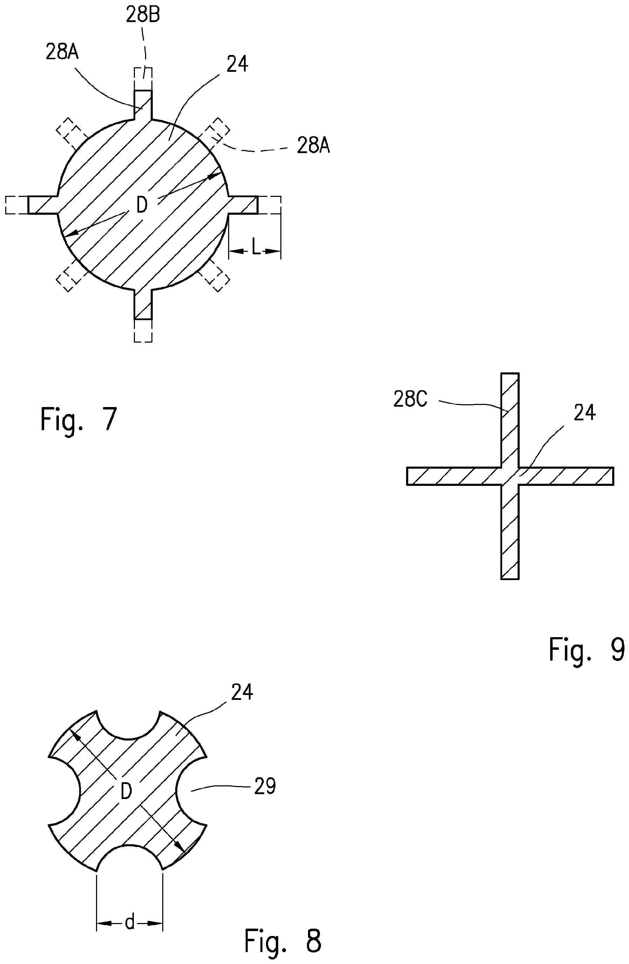

Figs. 5 and 6 show, by way of example for the filtering cartridge 14 in Fig. 3, the diverting effect of the flow F in both directions F1 and F2, caused by the fins 28, in the case when the flow of the incoming fluid impinge against a bar-shaped element 24 at an intermediate point between two fins 28, Fig. 6, respectively, at an edge of a fin 28, as shown in Fig. 7. In both cases, the fins 28, by causing a diversion of the fluid, contribute to reduce the kinetic energy and the speed of the fluid flowing through the cartridge, thereby facilitating the gravitational deposition and the guide downwards of the dirt particles present in the thermal fluid, into the upper decantation chamber 13 and into the bottom quieting chamber 16.

Figs. 7, 8 and 9 show some solutions for the bar-shaped elements 24 of the filtering cartridge 14. In the example in Fig. 7, a cylindrical bar 24 similar to that in Figs. 5 and 6 is shown again, wherein reference numbers 28A and 28B have been used to designate radial fins of different radial length; in addition, the possibility has been shown of providing the bar 24 with a plurality of fins 28A and/or 28B which are angularly spaced-apart by an angle of 45°, higher or lower, depending on the number of the fins with which each bar-shaped element 24 of the filtering cartridge is provided. With further reference to Fig. 7, with L has been generally designated the length of the fins in the radial direction; by way of example, depending on the diameter D of the bar-shaped element, the length L can range between 0.5 and 7 mm.

Fig. 8 shows a first variant in respect to Fig. 7; in the example of Fig. 7 the fluid diverting surfaces are provided by the fins 28; in the example in Fig. 8 the peripheral surfaces of the bar-shaped elements 24 for the diversion of the fluid are provided by slots or cavities 29 longitudinally extending on different sides of the bar-shaped element of the filtering cartridge.

Also in this case, the number and the shape of the cavities or slots 29 may change from what has been shown; in the example in Fig. 8 the bar-shaped element 24 is provided with four cavities having a semi-circular outline, angularly spaced apart by 90°. Again, with "D" is designated the diameter of the bar-shaped element and with "d" the diameter of the cavities 29; the D/d ratio between the diameters may range for example between 1.5 and 4 or higher.

Fig. 9 finally shows a third solution, wherein the bar-shaped element 24 has four fins 28C, arranged in a cross direction, defining the fluid diverting surfaces.

From what has been said and shown above, it is understood that a new type of filtering cartridge has been provided, and a new type of device for decantation and separation of dirt particles suspended in a fluid circulating within heating and/or cooling plants, having improving characteristics, as an alternative to the filtering cartridges and dirt separation devices currently in use.

What has been stated and shown in the annexed drawings has been merely given by way of example of the general characteristics of the invention, and several preferred embodiments thereof. Other modifications or variations may be nevertheless carried out to the whole cartridge and/or fluid diverting bar-shaped elements, as well as to the separation device, without however departing from the claims.

## Claims

1. A dirt separation device comprising a filtering cartridge (14) suitable for separation of dirt particles from a flowing fluid in heating and/or cooling plant, the cartridge (14) having a cylindrical body including fluid diverting means configured to cause repeated diversions and gravitational separation of dirt particles entrained by the fluid, the device comprising a hollow cylindrical body (10) having a peripheral wall (11) and a top wall (12) the inner surfaces thereof defining a decantation chamber (13) for housing the filtering cartridge (14), **characterized by** comprising:
an inlet port (17) and an outlet port (18) of the cylindrical body (10) of the device for the fluid, axially aligned and arranged in an orthogonal direction to a longitudinal axis of the decantation chamber (13);
first and second coaxially arranged fluid diverting units (14A,14B) of the cartridge (14), each comprising an annular base member (22;23) at one end of the cylindrical body of the cartridge (14), and a plurality of bar-shaped fluid diverting elements (24A;24B) parallely extending to said longitudinal axis of the cylindrical body (10) of the device from a side of the base member (22;23);
the bar-shaped elements (24A,24B) of said first and second fluid diverting units (14A,14B) being spaced apart each other to provide a plurality of fluid diverting paths; and in that:
the bar-shaped elements (24A,24B) of said first and second fluid diverting units (14A,14B) are configured with longitudinally extending and angularly spaced apart fins (28) and/or cavities (29) having fluid diverting surfaces.

2. The dirt separation device according to claim 1, **characterised in that** the fluid diverting fins (28) and/or cavities (29) of each bar-shaped element (24A,24B) are spaced apart each other of an angle comprised between 20° and 180°.

3. The dirt separation device according to claim 1 or 2, **characterised in that** the fluid diverting fins (28) and/or cavities (29) of at least part of the bar-shaped elements (24A,24B) are angularly oriented in at least two different directions.

4. The dirt separation device according to claim 1, **characterised in that**:
bar-shaped fluid diverting elements (24A) of a first fluid diverting unit (14A) are extending in a direction from a base member (22);
while the bar-shaped fluid diverting elements (24B) of a second fluid diverting unit (14B) are extending in a direction opposite to the previous one, from the other one (23) of the base members (22,23); and
**in that** the free ends of the bar-shaped elements (24A;24B) of each fluid diverting unit (14A;14B) are threaded into corresponding seating (27A;27B) of the base member (22;23) of the other one of said fluid diverting units (14A,14B).

5. The dirt separation device according to claim 1, **characterised in that** the bar-shaped fluid diverting elements (24A,24B) comprise a cylindrical body having a diameter (D) ranging from 3 to 10 mm, and a pitch (P) between contiguous bar-shaped elements (24A,24B) ranging from 7 to 30 mm.

6. The dirt separation device according to claim 1, **characterised in that** the longitudinal fins (28) are extending in a radial direction for a length ranging from 0.5 and 7 mm.

7. The dirt separation device according to claim 5, **characterised in that** the bar-shaped fluid diverting elements (24A;24B) are provided with longitudinal cavities (29), and **in that** the ratio between the diameter (D) of the cylindrical body and a maximum width or diameter (d) of the cavities (29), is equal to or higher than 1.4, preferably comprised between 1.4 and 5.

8. The dirt separation device according to claim 5, **characterised in that** the bar-shaped fluid diverting elements (24A,24B) are cross-shaped.

9. The dirt separation device according to claim 1, **characterised in that** a bottom cup (16) is provided defining a second quieting chamber (16) in fluid communication with the decantation chamber through the filtering cartridge (14), for the collection of the dirt particles that are separated, by gravity, from the fluid circulating through the decantation chamber (13).

10. The dirt separation device according to claim 9, **characterised in that** the cylindrical body of the filtering cartridge (14) is radially spaced apart from the inner surface of the peripheral wall (11), to provide an annular space (13A) for the circulation of the fluid, longitudinally extending to the cartridge (14), from the inlet and outlet ports (17,18) towards the bottom cup (15).

## Patentansprüche

1. Schmutztrennungsvorrichtung, umfassend eine Filterpatrone (14), die zur Trennung von Schmutzteilchen aus einem strömenden Fluid in einer Heiz-und/oder Kühlanlage geeignet ist, wobei die Patrone (14) einen zylindrischen Körper aufweist, der Fluid-umleitende Mittel enthält, die zum Verursachen wiederholter Umleitungen und Schwerkraft-Trennung von durch das Fluid mitgerissenen Schmutzteilchen ausgelegt sind, wobei die Vorrichtung einen hohlen zylindrischen Körper (10) umfasst, der eine periphere Wand (11) und eine oberste Wand (12) aufweist, wobei die inneren Oberflächen davon eine Absetz-Kammer (13) zur Aufnahme der Filterpatrone (14) definieren,
**dadurch gekennzeichnet, dass** sie umfasst:
einen Einlassport (17) und einen Auslassport (18) des zylindrischen Körpers (10) der Vorrichtung für das Fluid, axial ausgerichtet und angeordnet in einer rechtwinkligen Richtung zu einer Längsachse der Absetz Kammer (13);
erste und zweite koaxial angeordnete Fluid-umleitende Einheiten (14A,14B) der Patrone (14), jeweils eine ringförmige Grundkomponente (22;23) an einem Ende des zylindrischen Körpers der Patrone (14) umfassend, und wobei sich eine Mehrzahl von stabförmigen Fluid-umleitenden Elementen (24A;24B) parallel zu der Längsachse des zylindrischen Körpers (10) der Vorrichtung von einer Seite der Grundkomponente (22;23) erstreckt; wobei die stabförmigen Elemente (24A,24B) der ersten und zweiten Fluid-umleitenden Einheiten (14A,14B) zur Bereitstellung einer Mehrzahl von Fluid-umleitenden Wegen voneinander beabstandet sind; und dass:
die stabförmigen Elemente (24A,24B) der ersten und zweiten Fluid-umleitenden Einheiten (14A,14B) mit sich längs erstreckenden und winklig beabstandeten Flügeln (28) und/oder Hohlräumen (29) mit Fluid-umleitenden Oberflächen ausgelegt sind.

2. Schmutztrennungsvorrichtung nach Anspruch 1, **dadurch gekennzeichnet, dass** die Fluid-umleitenden Flügel (28) und/oder Hohlräume (29) von jedem stabförmigen Element (24A,24B) in einem Winkel, umfassend zwischen 20° und 180°, voneinander beabstandet sind.

3. Schmutztrennungsvorrichtung nach Anspruch 1 oder 2, **dadurch gekennzeichnet, dass** die Fluid-umleitenden Flügel (28) und/oder Hohlräume (29) von mindestens einem Teil der stabförmigen Elemente (24A,24B) winklig in mindestens zwei verschiedene Richtungen ausgerichtet sind.

4. Schmutztrennungsvorrichtung nach Anspruch 1, **dadurch gekennzeichnet, dass**:
stabförmige Fluid-umleitende Elemente (24A) einer ersten Fluid-umleitenden Einheit (14A) sich in eine Richtung von einer Grundkomponente (22) erstrecken;
während die stabförmigen Fluid-umleitenden Elemente (24B) von einer zweiten Fluid-umleitenden Einheit (14B) sich in eine Richtung gegenüber der vorherigen, von der anderen (23) der Grundkomponenten (22,23) erstrecken; und
indem die freien Enden der stabförmigen Elemente (24A;24B) von jeder Fluid-umleitenden Einheit (14A;14B) in eine entsprechende Aufnahme (27A;27B) der Grundkomponente (22;23) von der anderen der Fluid-umleitend Einheiten (14A,14B) eingezogen sind.

5. Schmutztrennungsvorrichtung nach Anspruch 1, **dadurch gekennzeichnet, dass** die stabförmigen Fluid-umleitenden Elemente (24A,24B) einen zylindrischen Körper mit einem Durchmesser (D) im Bereich von 3 bis 10 mm umfassen, und wobei ein Abstand (P) zwischen angrenzenden stabförmigen Elementen (24A,24B) im Bereich von 7 bis 30 mm liegt.

6. Schmutztrennungsvorrichtung nach Anspruch 1, **dadurch gekennzeichnet, dass** die längslaufenden Flügel (28) sich in eine radiale Richtung für eine Länge im Bereich von 0,5 und 7 mm erstrecken.

7. Schmutztrennungsvorrichtung nach Anspruch 5, **dadurch gekennzeichnet, dass** die stabförmigen Fluid-umleitenden Elemente (24A;24B) mit längslaufenden Hohlräumen (29) versehen sind, und dass das Verhältnis zwischen dem Durchmesser (D) des zylindrischen Körpers und einer maximalen Breite oder Durchmesser (d) der Hohlräume (29), gleich oder größer ist als 1,4, vorzugsweise zwischen 1,4 und 5 umfasst, ist.

8. Schmutztrennungsvorrichtung nach Anspruch 5, **dadurch gekennzeichnet, dass** die stabförmigen Fluid-umleitenden Elemente (24A,24B) kreuzförmig sind.

9. Schmutztrennungsvorrichtung nach Anspruch 1, **dadurch gekennzeichnet, dass** ein Bodenbecher (16) bereitgestellt wird, der eine zweite Ruhe-Kammer (16) in fluider Kommunikation mit der Absetz-Kammer durch die Filterpatrone (14) definiert, zur Sammlung der Schmutzteilchen die durch Schwerkraft aus dem durch die Absetz-Kammer (13) zirkulierten Fluid abgetrennt wurden.

10. Schmutztrennungsvorrichtung nach Anspruch 9, **dadurch gekennzeichnet, dass** der zylindrische Körper der Filterpatrone (14) radial von der inneren Oberfläche der peripheren Wand (11) beabstandet ist, zur Bereitstellung eines ringförmigen Raums (13A) für die Zirkulation des Fluids, der sich längs zur Patrone (14) von den Einlass- und Auslassports (17,18) zu dem Bodenbecher (15) erstreckt.

## Revendications

1. Dispositif de séparation d'impuretés comprenant une cartouche filtrante (14) appropriée pour la séparation de particules d'impuretés à partir d'un fluide qui s'écoule dans une installation de chauffage et/ou de refroidissement, la cartouche (14) possédant un corps cylindrique englobant un moyen de déviation de fluide configuré pour obtenir des séparations par gravité et des déviations répétées de particules d'impuretés entraînées par le fluide, le dispositif comprenant un corps cylindrique creux (10) possédant une paroi périphérique (11) et une paroi supérieure (12) dont les surfaces internes définissent une chambre de décantation (13) dans laquelle vient se loger la cartouche filtrante (14), **caractérisé par le fait qu'**il comprend :
un orifice d'entrée (17) et un orifice de sortie (18) du corps cylindrique (10) du dispositif pour le fluide, alignés en direction axiale et disposés dans une direction orthogonale par rapport à un axe longitudinal de la chambre de décantation (13) ;
une première et une seconde unité de déviation de fluide (14A, 14B) de la cartouche (14) disposées de manière coaxiale, chacune comprenant un élément de base annulaire (22 ; 23) à une extrémité du corps cylindrique de la cartouche (14) et plusieurs éléments de déviation de fluide (24A; 24B) en forme de barres, s'étendant parallèlement audit axe longitudinal du corps cylindrique (10) du dispositif à partir d'un côté de l'élément de base (22; 23) ;
les éléments en forme de barres (24A, 24B) desdites première et seconde unités de déviation de fluide (14A, 14B) étant espacés les uns des autres pour procurer plusieurs voies de déviation de fluide ; et en ce que :
les éléments en forme de barres (24A, 24B) desdites première et seconde unités de déviation de fluide (14A, 14B) sont configurés avec des ailettes (28) s'étendant en direction longitudinale et espacées en formant un angle et/ou avec des cavités (29) possédant des surfaces de déviation de fluide.

2. Dispositif de séparation d'impuretés selon la revendication 1, **caractérisé en ce que** les ailettes (28) et/ou les cavités (29) de déviation de fluide de chacun des éléments en forme de barres (24A, 24B) sont espacées les unes des autres en formant un angle compris entre 20° et 180°.

3. Dispositif de séparation d'impuretés selon la revendication 1 ou 2, **caractérisé en ce que** les ailettes (28) et/ou les cavités (29) de déviation de fluide d'au moins une partie des éléments en forme de barres (24A, 24B) sont orientées en formant un angle dans au moins deux directions différentes.

4. Dispositif de séparation d'impuretés selon la revendication 1, **caractérisé en ce que** :
des éléments de déviation de fluide en forme de barres (24A) d'une première unité de déviation de fluide (14A) s'étendent dans une direction à partir d'un élément de base (22) ;
tandis que les éléments de déviation de fluide en forme de barres (24B) d'une seconde unité de déviation de fluide (14B) s'étendent dans une direction opposée à la précédente, à partir de l'autre (23) des éléments de base (22, 23) ; et
**en ce que** les extrémités libres des éléments en forme de barres (24A; 24B) de chaque unité de déviation de fluide (14A; 14B) sont insérées par filet de vis dans un siège correspondant (27A; 27B) de l'élément de base (22; 23) de l'autre desdites unités de déviation de fluide (14A, 14B).

5. Dispositif de séparation d'impuretés selon la revendication 1, **caractérisé en ce que** les éléments de déviation de fluide en forme de barres (24A, 24B) comprennent un corps cylindrique possédant un diamètre (D) s'étendant dans la plage de 3 à 10 mm et un pas (P) entre des éléments contigus en forme de barres (24A, 24B) se situant dans la plage de 7 à 30 mm.

6. Dispositif de séparation d'impuretés selon la revendication 1, **caractérisé en ce que** les ailettes longitudinales (28) s'étendent dans une direction radiale sur une longueur se situant dans la plage de 0,5 à 7 mm.

7. Dispositif de séparation d'impuretés selon la revendication 5, **caractérisé en ce que** les éléments de déviation de fluide en forme de barres (24A, 24B) sont munis de cavités longitudinales (29), et **en ce que** le rapport entre le diamètre (D) du corps cylindrique et une largeur maximale ou un diamètre maximal (d) des cavités (29) est égal ou supérieur à 1,4, de préférence est compris entre 1,4 et 5.

8. Dispositif de séparation d'impuretés selon la revendication 5, **caractérisé en ce que** les éléments de déviation de fluide en forme de barres (24A, 24B) possèdent une configuration cruciforme.

9. Dispositif de séparation d'impuretés selon la revendication 1, **caractérisé en ce qu'**une cuvette inférieure (16) est prévue, définissant une seconde chambre d'atténuation (16) en communication par fluide avec la chambre de décantation via la cartouche filtrante (14), pour la récolte des particules d'impuretés qui sont séparées, sous l'effet de la gravité, à partir du fluide circulant à travers la chambre de décantation (13).

10. Dispositif de séparation d'impuretés selon la revendication 9, **caractérisé en ce que** le corps cylindrique de la cartouche filtrante (14) est espacé en direction radiale de la surface interne de la paroi périphérique (11) pour procurer un espace annulaire (13A) pour la circulation du fluide, s'étendant en direction longitudinale par rapport à la cartouche (14), à partir des orifices d'entrée et de sortie (17, 18) en direction de la cuvette inférieure (15).
